Europäisches Patentamt

European Patent Office

Office européen des brevets

(19)

(11) Veröffentlichungsnummer : **0 393 356 B1**

# (12) EUROPÄISCHE PATENTSCHRIFT

(45) Veröffentlichungstag der Patentschrift :
**01.09.93 Patentblatt 93/35**

(51) Int. Cl.⁵ : **B01J 21/08,** B01J 35/10, B01J 37/00, C04B 35/14, C04B 38/00

(21) Anmeldenummer : **90104993.2**

(22) Anmeldetag : **16.03.90**

(54) **Presslinge auf Basis von pyrogen hergestelltem Siliciumdioxid, Verfahren zu ihrer Herstellung und ihre Verwendung.**

(30) Priorität : **17.04.89 DE 3912504**

(43) Veröffentlichungstag der Anmeldung :
**24.10.90 Patentblatt 90/43**

(45) Bekanntmachung des Hinweises auf die Patenterteilung :
**01.09.93 Patentblatt 93/35**

(84) Benannte Vertragsstaaten :
**BE CH DE ES FR GB IT LI NL**

(56) Entgegenhaltungen :
**EP-A- 0 050 902
DE-A- 3 406 185
DE-A- 3 803 895
FR-A- 2 313 973
US-A- 4 256 682**

(73) Patentinhaber : **Degussa Aktiengesellschaft
Weissfrauenstrasse 9
D-60311 Frankfurt (DE)**

(72) Erfinder : **Deller, Klaus, Dr.
Friedhofstrasse 47
D-6452 Hainburg (DE)**
Erfinder : **Förster, Martin, Dr.
Am roten Weg 13
D-6471 Büdingen (DE)**
Erfinder : **Krause, Helmfried
Odenwaldstrasse 39
D-6458 Rodenbach (DE)**

## Beschreibung

Die Erfindung betrifft Preßlinge auf Basis von pyrogen hergestelltem Siliciumdioxid, Verfahren zu ihrer Herstellung und ihre Verwendung als Katalysatorträger oder Katalysator.

Pyorgen hergestellte Siliciumoxide zeichnen sich durch extreme Feinteiligkeit und entsprechend hohe spezifische Oberfläche, sehr hohe Reinheit, sphärische Teilchenform und das Fehlen von Poren aus. Aufgrund dieser Eigenschaften finden die pyrogen hergestellten Oxide zunehmend Interesse als Träger für Katalysatoren (D. Koth, H. Ferch, Chem. Ing. Techn. 52, 628 (1980).

Da pyrogen hergestellte Oxide besonders feinteilig sind, bereitet die Verformung zu Katalysatorträgern bzw. Katalysatoren einige Schwierigkeiten.

Aus der DE-OS 31 32 674 ist ein Verfahren zur Herstellung von Preßlingen aus pyrogen hergestellten Oxiden bekannt, in dem Kieselsol als Bindemittel verwendet wird.

Aus der DE-OS 34 06 185 ist ein Verfahren zur Herstellung von Preßlingen bekannt, in dem man Glasurfrittenpulver als Bindemittel und Glycerin als Gleitmittel verwendet.

Aus der DE-PS 21 00 778 ist es bekannt, Granulate auf Basis pyrogen hergestellter Siliciumdioxide zur Herstellung von z. B. Vinylacetatmonomer als Katalysatorträger einzusetzen.

Diese bekannte Verfahren haben den Nachteil, daß die erhaltene Preßlinge für bestimmte katalytische Reaktionen, wie z. B. die Vinylacetatherstellung aus Äthylen, Essigsäure und Sauerstoff oder die Hydratisierung von Äthylen zu Äthanol, nicht die gewünschten optimalen Eigenschaften, wie z. B. eine hohe Bruchfestigkeit, aufweisen.

Gegenstand der Erfindung sind Preßlinge auf Basis von pyrogen hergestelltem Siliciumdioxid mit den folgenden physikalisch-chemischen Kenndaten:

| | |
|---|---|
| Außendurchmesser: | 2 bis 15 mm |
| BET-Oberfläche: | 50 bis 400 $m^2$/g |
| Porenvolumen: | 0,6 bis 1,3 ml/g |
| Bruchfestigkeit: | 50 bis 150 N |
| Porenverteilung: | keine Poren < 5 nm Durchmesser, nur Meso- und Makroporen |
| Zusammensetzung: | > 99 Gew.-% $SiO_2$ |
| Abrieb: | < 1,0 % |
| Schüttgewicht: | 400 - 500 g/l |

Win weiterer Gegenstand der Erfindung ist ein Verfahren zur Herstellung von Preßlingen auf Basis von pyrogen hergestelltem Siliciumdioxid mit den folgenden physikalisch-chemischen Kenndaten:

| | |
|---|---|
| Außendurchmesser: | 2 bis 15 mm |
| BET-Oberfläche: | 50 bis 400 $m^2$/g |
| Porenvolumen: | 0,6 bis 1,3 ml/g |
| Bruchfestigkeit: | 50 bis 150 N |
| Porenverteilung: | keine Poren < 5 nm Durchmesser, nur Meso- und Makroporen |
| Zusammensetzung: | > 99 Gew.-% $SiO_2$ |
| Abrieb: | < 1,0 % |
| Schüttgewicht: | 400 - 500 g/l |

welches dadurch gekennzeichnet ist, daß man pyrogen hergestelltes Siliciummdioxid mit Harnstoff, Methylcellulose, Aluminiumstearat und/oder Magnesiumstearat, Graphit unter Zusatz von Wasser homogenisiert, bei einer Temperatur von 80 bis 120 °C trocknet, zu einem Pulver zerkleinert, das Pulver zu Preßlingen verpreßt und während eines Zeitraumes von 0,5 bis 8 Stunden bei einer Temperatur von 400 bis 1200 °C tempert.

Zur Durchführung des erfindungsgemäßen Verfahrens sind prinzipiell alle Mischer oder Mühlen geeignet, die eine gute Homogenisierung ermöglichen, wie z.B. Schaufel-, Wirbelschicht-, Kreisel- oder Luftstrommischer. Besonders geeignet sind Mischer, mit denen eine zusätzliche Verdichtung des Mischgutes möglich ist, z. B. Pflugscharmischer, Kollergänge oder Kugelmühlen. Nach dem Homogenisieren kann eine weitgehende Trocknung bei 80 - 120 °C erfolgen, so daß man nach dem Zerkleinern ein rieselfähiges Pulver erhält. Die Herstellung der Preßlinge kann auf Stempelpressen, Exzenterpressen, Strangpressen oder Rundlaufpressen als auch auf Kompaktoren erfolgen.

Vor dem Verpressen kann in einer besonderen Ausführungsform der Erfindung die Mischung die folgende Zusammensetzung aufweisen:

| | |
|---|---|
| 50 - 90 Gew.-% | Siliciumdioxid, |
| | vorzugsweise 60 - 80 Gew.-%, |
| 0,1 - 20 Gew.-% | Aluminiumstearat, |
| | vorzugsweise 10 Gew.-% und/oder |
| 0,1 - 20 Gew.-% | Magnesiumstearat, |

|  |  |
|---|---|
|  | vorzugsweise 1 - 10 Gew.-%, |
| 0,1 - 20 Gew.-% | Graphit, vorzugsweise 1 - 5 Gew.-%, |
| 5 - 48 Gew.-% | Porenbildner wie Harnstoff, |
|  | Methylcellulose, |
|  | vorzugsweise 10 - 40 Gew.-% |

Die Preßlinge können verschiedene, z. B. zylinderische, kugelförmige oder ringförmige Formen mit einem Außendurchmesser von 2 bis 15 mm aufweisen.

Die Preßlinge werden bei 400 - 1200 °C 30 Minuten bis 8 Stunden getempert.

Durch Variation der Einsatzstoffmengen und des Preßdruckes kann die Bruchfestigkeit, die spez. Gesamtoberfläche und das Porenvolumen in einem gewissen Rahmen verändert werden.

Die erfindungsgemäßen Preßlinge können entweder direkt als Katalysator oder als Katalysatorträger, nachdem die Formkörper während oder nach ihrer Herstellung mit einer Lösung einer katalytisch wirksamen Substanz getränkt und ggf. durch eine geeignete Nachbehandlung aktiviert wurden, Verwendung finden.

Insbesondere lassen sich die Preßlinge aus pyrogen hergestelltem Siliciumdioxid in der Anwendung als Träger für den Katalysator bei der Herstellung von Vinylacetatmonomer aus Ethylen, Essigsäure und Sauerstoff sowie als Katalysator im Ethylenhydratisierungsverfahren besonders gut verwenden.

Die erfindungsgemäßen Preßlinge weisen die folgenden Vorteile auf:

Hohe Reinheit

Geringer Abrieb

Hohes Porenvolumen

Keine Poren < 5 nm, nur Meso und Makroporen


Beispiele


Als pyrogen hergestelltes Siliciumdioxid werden Siliciumdioxide mit den folgenden physikalisch-chemischen Kenndaten eingesetzt:

| Aerosil | | 90 | 130 | 150 | 200 | 300 | 380 |
|---|---|---|---|---|---|---|---|
| Oberfläche nach BET | m²/g | 90±15 | 130±25 | 150±15 | 200±25 | 300±30 | 380±30 |
| Mittlere Größe der Primärteilchen | nm | 20 | 16 | 14 | 12 | 7 | 7 |
| Stampfdichte[1] | g/l | ca. 80 | ca. 50 | ca. 50 | ca. 50 | ca. 50 | ca. 50 |
| Trocknungsverlust[2] (2 Stunden bei 105 °C) | % | < 1 | < 1,5 | < 0,5[7] | < 1,5 | < 1,5 | < 1,5 |
| Glühverlust[2] [5] (2 Stunden bei 1000 °C) | % | < 1 | < 1 | < 1 | < 1 | < 2 | < 2,5 |
| pH-Wert[3] (in 4 %iger wäßriger Dipsersion) | | 3,6-4,5 | 3,6-4,3 | 3,6-4,3 | 3,6-4,3 | 3,6-4,3 | 3,6-4,3 |
| $SiO_2$[6] | % | > 99,8 | > 99,8 | > 99,8 | > 99,8 | > 99,8 | > 99,8 |
| $Al_2O_3$[6] | % | < 0,05 | < 0,05 | < 0,05 | < 0,05 | < 0,05 | < 0,05 |
| $Fe_2O_3$[6] | % | < 0,003 | < 0,003 | < 0,003 | < 0,003 | < 0,003 | < 0,003 |
| $TiO_2$[6] | % | < 0,03 | < 0,03 | < 0,03 | < 0,03 | < 0,03 | < 0,03 |
| HCl[6] [8] | % | < 0,025 | < 0,025 | < 0,025 | < 0,025 | < 0,025 | < 0,025 |
| Siebrückstand[4] (nach Mocker, 45 µm) | % | < 0,05 | < 0,05 | < 0,05 | < 0,05 | < 0,05 | < 0,05 |

[1]) nach DIN 53 194

[2]) nach DIN 55 921

[3]) nach DIN 53 200

[4]) nach DIN 53 580

[5]) bezogen auf die 2 Stunden bei 105 °C getrocknete Substanz

[6]) bezogen auf die 2 Stunden bei 1000 °C geglühte Substanz

[8]) HCL-Gehalt ist Bestandteil des Glühverlustes

Zur Herstellung von AEROSIL wird in eine Knallgasflamme aus Wasserstoff und Luft eine flüchtige Siliciumverbindung eingedüst. In den meisten Fällen verwendet man Siliciumtetrachlorid. Diese Substanz hydrolysiert unter dem Einfluß des bei der Knallgasreaktion entstehenden Wassers zu Siliciumdioxid und Salzsäure. Das Siliciumdioxid tritt nach dem Verlassen der Flamme in eine sogenannte Koagulationszone ein, in der die AEROSIL-Primärteilchen und Primäraggregate agglomerieren. Das in diesem Stadium als eine Art Aerosol vorliegende Produkt wird in Zyklonen von den gasförmigen Begleitsubstanzen getrennt und anschließend mit feuchter Heißluft nachbehandelt. Durch dieses Verfahren läßt sich der Rest-Salzsäuregehalt unter 0,025 % senken. Da das AEROSIL am Ende dieses Prozesses mit einer Schüttdichte von nur ca. 15 g / l anfällt, wird eine Vakuumverdichtung angeschlossen, mit der sich Stampfdichten von ca. 50 g / l und mehr einstellen lassen.

Die Teilchengrößen der auf diese Weise gewonnenen Produkte können mit Hilfe der Reaktionsbedingungen variiert werden. Solche Parameter sind z. B. die Flammentemperatur, der Wasserstoff- oder Sauerstoffanteil, die Siliciumtetrachloridmenge, die Verweilzeit in der Flamme oder die Länge der Koagulationsstrecke.

Die BET-Oberfläche wird gemäß DIN 66 131 mit Stickstoff bestimmt.

Das Porenvolumen wird rechnerisch aus der Summe von Mikro-, Meso- und Makroporenvolumen bestimmt.

Die Bruchfestigkeit wird mittels des Bruchfestigkeitstesters der Fa. Erweka, Typ TBH 28, bestimmt.

Die Bestimmung der Mikro- und Mesoporen erfolgt durch Aufnahme einer $N_2$-Isotherme und deren Auswertung nach BET, de Boer und Barret, Joyner, Halenda.

Die Bestimmung der Makroporen erfolgt durch das Hg Einpreßverfahren.

Der Abrieb wird mittels des Abrieb- und Triabilitätstesters der Fa. Erweka, Typ TAR, bestimmt.

Beispiel 1

62,0 % Aerosil 200
5,8 % Aluminiumstearat
9,5 % Methylcellulose
3,7 % Graphit
19,0 % Harnstoff

werden unter Zusatz von Wasser kompaktiert, bei 100 °C 24 Stunden getrocknet, zu einem rieselfähigen Pulver zerkleinert und mit einer Rundlauf-Tablettenpresse zu Preßlingen verformt.

Die Rohtabletten werden bei 200 °C calciniert und anschließend 4 Stunden bei 1000 °C getempert.

Die erhaltenen Preßlinge weisen folgende physikalisch-chemischen Kenndaten auf:

| | |
|---|---|
| Außendurchmesser: | 5 mm |
| BET-Oberfläche: | 148 m²/g |
| Porenvolumen: | 0,73 ml/g |
| Porenverteilung: | Keine Poren < 5 nm, nur Meso- und Makroporen |
| Bruchfestigkeit: | 12,2 N |
| Abrieb: | 0,45 % |
| Schüttgewicht: | 530 g/l |
| Zusammensetzung: | 99,2 % $SiO_2$ |

Beispiel 2

62,5 % Aerosil 200
5,8 % Magnesiumstearat
9,6 % Methylcellulose
22,1 % Harnstoff
werden gemäß Beispiel 1 zu Preßlingen verformt.

Die Rohtabletten werden bei 250 °C calciniert und anschließend 6 Stunden bei 750 °C getempert.

Die erhaltenen Preßlinge weisen folgende physikalisch-chemischen Kenndaten auf:

| | |
|---|---|
| Außendurchmesser: | 6 mm |
| BET-Oberfläche: | 176 m²/g |
| Porenvolumen: | 0,76 ml/g |
| Porenverteilung: | Keine Poren < 4 nm |
| | nur Meso- und Makroporen |
| Bruchfestigkeit: | 54 N |
| Abrieb: | 0,9 % |
| Schüttgewicht: | 500 g/l |
| Zusammensetzung: | 99,4 % $SiO_2$ |

Beispiel 3

62,5 % Aerosil 380
5,8 % Magnesiumstearat
9,6 % Methylcellulose
22,1 % Harnstoff
werden unter Zusatz von Wasser kompaktiert, bei 100 °C 24 Stunden getrocknet, zu einem rieselfähigen Pulver zerkleinert und auf einer Excenterpresse in Preßlinge verformt.

Die Rohtabletten werden bei 250 °C calciniert und anschließend 8 Stunden bei 700 °C getempert.

Die erhaltenen Preßlinge weisen folgende physikalisch-chemischen Kenndaten auf:

| | |
|---|---|
| Außendurchmesser: | 5 mm |
| BET-Oberfläche: | 289 m²/g |
| Porenvolumen: | 1,09 ml/g |
| Porenverteilung: | Keine Poren < 5 nm |
| | nur Meso- und Miakroporen |
| Bruchfestigkeit: | 105 N |
| Abrieb: | 0,9 % |
| Schüttgewicht: | 480 g/l |
| Zusammensetzung: | 99,4 % $SiO_2$ |

Beispiel 4

62,5 % Aerosil 90
5,8 % Magnesiumstearat
9,6 % Methylcellulose
22,1 % Harnstoff
werden gemäß Beispiel 3 zu Preßlingen verformt.

Die Rohtabletten werden bei 250 °C calciniert und 8 Stunden bei 900 °C getempert.

Die erhaltenen Preßlinge weisen folgende physikalisch-chemischen Kenndaten auf:

| | |
|---|---|
| Außendurchmesser: | 5 mm |
| BET-Oberfläche: | 73 m²/g |
| Porenvolumen: | 0,88 ml/g |
| Porenverteilung: | Keine Poren < 5 nm, |
| | nur Meso- und Makroporen |
| Bruchfestigeit: | 55 N |
| Abrieb: | 0,9 % |
| Schüttgewicht: | 450 g/l |
| Zusammensetzung: | 99,4 % $SiO_2$ |

6

**Patentansprüche**

1. Preßlinge auf Basis von pyrogen hergestelltem Siliciumdioxid mit den folgenden physikalisch-chemischen Kenndaten:

| | |
|---|---|
| Außendurchmesser: | 2 bis 15 mm |
| BET-Oberfläche: | 50 bis 400 m²/g |
| Porenvolumen: | 0,6 bis 1,3 ml/g |
| Bruchfestigkeit: | 50 bis 150 N |
| Porenverteilung: | keine Poren < 5 nm Durchmesser, nur Meso- und Makroporen |
| Zusammensetzung | > 99 Gew.-% $SiO_2$ |
| Abrieb: | < 1,0 % |
| Schüttgewicht: | 400 bis 500 g/l |

2. Verfahren zur Herstellung von Preßlingen auf Basis von pyrogen hergestelltem Siliciumdioxid mit den folgenden physikalisch-chemischen Kenndaten:

| | |
|---|---|
| Außendurchmesser: | 2 bis 15 mm |
| BET-Oberfläche: | 50 bis 400 m²/g |
| Porenvolumen: | 0,6 bis 1,3 ml/g |
| Bruchfestigkeit: | 50 bis 150 N |
| Porenverteilung: | keine Poren < 5 nm Durchmesser |
| Zusammensetzung: | > 99 Gew.-% $SiO_2$ |
| Abrieb: | < 1,0 % |
| Schüttgewicht: | 400 bis 500 g/l |

dadurch gekennzeichnet, daß man pyrogen hergestelltes Siliciumdioxid mit Harnstoff, Methylcellulose und/oder Magnesiumstearat, Graphit, Aluminiumstearat unter Zusatz von Wasser homogenisiert, bei einer Temperatur von 80 bis 120 °C trocknet, zu einem Pulver zerkleinert, das Pulver zu Preßlingen verpreßt und während eines Zeitraumes von 0,5 bis 8 Stunden bei einer Temperatur von 400 bis 1200 °C tempert.

3. Verwendung der Preßlinge gemäß Anspruch 1 als Katalysatorträger oder Katalysator.

**Claims**

1. Pellets based on pyrogenic silicon dioxide having the following physico-chemical characteristic data:

| | |
|---|---|
| external diameter: | 2 to 15 mm |
| BET surface: | 50 to 400 m²/g |
| pore volume: | 0.6 to 1.3 ml/g |
| breaking strength: | 50 to 150 N |
| pore distribution: | no pores < 5 nm in diameter, only meso and macro pores |
| composition: | > 99 % by weight $SiO_2$ |
| abrasion: | < 1.0% |
| apparent density: | 400 to 500 g/l. |

2. A process for the production of pellets based on pyrogenic silicon dioxide having the following physico-chemical characteristic data:

| | |
|---|---|
| external diameter: | 2 to 15 mm |
| BET surface: | 50 to 400 m²/g |
| pore volume: | 0.6 to 1.3 ml/g |
| breaking strength: | 50 to 150 N |
| pore distribution: | no pores < 5 nm in diameter, only meso and macro pores |
| composition: | > 99 % by weight $SiO_2$ |
| abrasion: | < 1.0% |
| apparent density: | 400 to 500 g/l, |

characterized in that pyrogenic silicon dioxide is homogenized with urea, methyl cellulose and/or magnesium stearate, graphite, aluminium stearate in the presence of water, dried at a temperature of 80 to 120°C, size-reduced to powder, the powder is processed to pellets and then heated for 0.5 to 8 hours at a temperature of 400 to 1,200°C.

3. The use of the pellets claimed in claim 1 as a catalyst support or catalyst.


**Revendications**

1. Pièces pressées à base de dioxyde de silicium préparé par pyrogénation avec les caractéristiques physico-chimiques suivantes :

| | |
|---|---|
| Diamètre extérieur : | 2 à 15 mm |
| Surface BET : | 50 à 400 m$^2$/g |
| Volume de pores : | 0,6 à 1,3 ml/g |
| Résistance à la rupture : | 50 à 150 N |
| Répartition de pores : | pas de pores < 5 nm de diamètre, seulement méso et macropores |
| Composition : | > 99 % en poids de SiO$_2$ |
| Abrasion : | < 1,0 % |
| Masse volumique apparente : | 400-500 g/l |

2. Procédé de préparation de pièces pressées à base de dioxyde de silicium préparé par pyrogénation avec les caractéristiques physico-chimiques suivantes :

| | |
|---|---|
| Diamètre extérieur : | 2 à 15 mm |
| Surface BET : | 50 à 400 m$^2$/g |
| Volume de pores : | 0,6 à 1,3 ml/g |
| Résistance à la rupture : | 50 à 150 N |
| Répartition de pores : | pas de pores < 5 nm de diamètre, |
| Composition : | > 99 % en poids de SiO$_2$ |
| Abrasion : | < 1,0 % |
| Masse volumique apparente : | 400-500 g/l |

caractérisé en ce qu'on homogénéise du dioxyde de silicium préparé par pyrogénation avec de l'urée, de la méthylcellulose et/ou du stéarate de magnésium, du graphite, du stéarate d'aluminium en ajoutant de l'eau, on sèche à une température comprise entre 80 et 120°C, on réduit en poudre, on comprime la poudre en pièces pressées et on traite pendant un intervalle de temps de 0,5 à 8 heures à une température comprise entre 400 et 1200°C.

3. Utilisation de pièces pressées selon la revendication 1, comme support de catalyseur ou catalyseur.